# EUROPEAN PATENT APPLICATION

(11) **EP 3 767 103 A1**
(43) Date of publication of application: **20.01.2021**
(21) Application number: 19186993.2
(22) Date of filing: 18.07.2019
(51) Int. Cl.: F03D 80/50, F03D 13/10, F03D 13/40, F03D 13/25

(54) **WIND TURBINE AND METHOD FOR CONSTRUCTING OR SERVICING A WIND TURBINE**

(71) Applicant: Siemens Gamesa Renewable Energy A/S, 7330 Brande (DK)
(72) Inventor: Soerensen, Johnny, 6920 Videbæk (DK)
(74) Representative: Aspacher, Karl-Georg

(57) **Abstract**

Wind turbine (1), comprising of a foundation (2), a transition platform (4) attached thereupon having at least one arm (5) that extends horizontally outward from a central section (14), and a tower (3) connected to the central section (14) of the transition platform, wherein the arm (5) of the transition platform (4) comprises a passage (17), connecting the central section (14) with the outward end (16) of the respective arm (5), which is formed by a floor (11), a roof (12) and at least two side walls (10) of the transition platform (4), characterized in that a respective container (6) is arranged on the floor (11) at least partially within the respective passage (17), the container (6) featuring a first opening (19) on the side facing towards the central section (14) and a second opening (25) on the opposite side and a passageway (27) connecting the first and the second opening (19,25) allowing personal (26) to pass through the container (6) into the central section (14), wherein the container (6) houses at least one electrical component (20) of the wind turbine (1) which is connected to at least one further electrical component (15) of the wind turbine (1) outside of the container (6).

## Description

The invention concerns a wind turbine, comprising of a foundation, a transition platform attached thereupon having at least one arm that extends horizontally outward from a central section, and a tower connected to the central section of the transition platform, wherein the arm of the transition platform comprises a passage, connecting the central section with the outward end of the respective arm, which is formed by a floor, a roof and at least two side walls of the transition platform. Additionally, the invention concerns a method for constructing or servicing of a wind turbine.

Wind turbines can be placed either onshore or offshore, whereas offshore wind turbines can comprise a foundation, a tower, a nacelle and optionally a transition platform. The foundation is the link between the sea bed and the rest of the wind turbine, or can also be implemented as a so-called floating foundation wherein the foundation is supported by the water. Besides connecting the sea bed to the rest of the wind turbine and carrying the wind turbine, the foundation can also transfer and dispute the weight of the wind turbine as well as the load acting on the wind turbine to the seabed. A foundation can e.g. be a shallow foundation, a monopile base, a tripod-pile structure, a tripod suction structure, or a gravity base structure.

The tower of the wind turbine basically connects the foundation or the transition platform with the nacelle on top of the tower of the wind turbine. The nacelle is placed on top of the tower of the wind turbine, connecting the tower with the rotor of the wind turbine. Usually, a generator, which is converting the mechanical energy coming from the rotor blades into electrical energy, is placed in the nacelle.

Since the electrical output power of the wind turbine and therewith the size and the weight of the electrical equipment required to run the wind turbine has increased over the past years, the weight of the wind turbine as well as the space required inside the wind turbine has also increased.

In the past, storage of the equipment of a wind turbine has been solved by providing a transition platform that is connecting the foundation of the wind turbine and the tower and that houses the electrical equipment. Such a transition platform is e.g. described in WO 2018/046205 A1.

The installation of the electrical equipment can either be performed onshore, and therefore prior to mounting the transition platform onto the foundation or the installation of the equipment can be performed offshore, which is after the transition platform has been installed onto the foundation of the wind turbine.

WO 2016/055068 A1 describes at least one power pack, which is stored inside a housing placed on a transition platform of an offshore wind turbine. For servicing, the power packs are disconnected from the further electrical equipment inside the housing, removed individually from the housing, and transported to an onshore service station where the servicing can be performed. Alternatively, servicing can also be performed offshore.

Offshore servicing of especially electrical equipment used to operate the wind turbine, or disassembling and transporting electrical equipment individually from the transition platform to an onshore facility is laborious, time consuming and depends on the environmental conditions such as the weather or the tide of the sea. Offshore servicing further bears the risk that faulty components are only detected once the equipment has been installed on the transition platform offshore. For these reasons, servicing of offshore wind turbines is time consuming and therefore also expensive.

The aim of the invention is therefore to facilitate the installation and servicing of equipment on a wind turbine.

This problem is solved by the initially described wind turbine, wherein a respective container is arranged on the floor at least partially within the respective passage, the container featuring a first opening on the side facing towards the central section and a second opening on the opposite side and a passageway connecting the first and the second opening allowing personal to pass through the container into the central section, wherein the container houses at least one electrical component of the wind turbine which is connected to at least one further electrical component of the wind turbine outside of the container.

According to the present invention, at least part of the electrical components of the wind turbine is housed in at least one container or module that is also used to provide a passageway to the central section. The equipment used to run the wind turbine can be at least partially preinstalled in the container and tested onshore. Once all the equipment works, the pre-equipped container can be transferred to the off-shore wind turbine and placed at least partially inside the passage of an arm of the transition platform. By integrating electrical components and a passageway for personal into a container, the components can be installed such that they are easily accessible by personal via the passageway. The preinstalled equipment inside the container is preferably connected to the electrical equipment of the wind turbine by a plug-in connection.

Offshore wind turbines can be electrically connected to other infrastructure which is preferentially land based. In order to deliver electrical energy to this connection, the wind turbine can, for example, comprise a transformer and/or a converter as electrical component. The wind turbine can also comprise switch gear, which is a combination between fuses, switches, and/or circuit breakers, used to control, protect and isolate the electrical equipment, as electrical component.

Once the transition platform has been mounted onto the foundation of the wind turbine, the equipment, especially the electrical equipment can easily be mounted or dismounted onto or from the wind turbine by putting the container onto the wind turbine or removing them respectively.

Since the equipment, especially the electrical equipment can be installed and pre-arranged inside the container onshore, the functionality of the equipment can be tested onshore as well. When a faulty component has been installed, this component can easily be replaced onshore. Once everything works, the container is transferred to the wind turbine and installed there. Thereby, heavy-load transports, such as the transfer of the transition platform from the offshore wind turbine to the onshore region and back, can be avoided for servicing. At the same time, offshore servicing, which can be tedious, time consuming, and also strongly depending on the environmental conditions, such as the weather, can also be avoided or reduced.

The use of pre-equipped containers described in the present invention further facilitates servicing significantly: In case of faulty components, the container can be replaced by another, functioning container, and the container comprising the faulty components can be transported to the shore and repaired there.

The containers described in the present invention are preferentially made from a material which allows for transportation of the container from the shore to the wind turbine, housing of the equipment located inside the container, and storage of the container offshore without showing corrosion. One example for a material which is suitable for a container is stainless steel.

The containers described in the present invention further have two openings at opposite sides. In order to keep the pre-equipped equipment inside the container and to protect it from water, the openings can be sealed by doors or hatches. The doors or hatches are preferentially of a size that enables service personnel to enter or pass through the container. Inside the container, there is a space comprising for example the electrical components required to run the wind turbine, further tools such as tools which are required for repairing permanent components of the wind turbine and optionally a working space for personnel working on the wind turbine.

The container can provide a connection between the electrical components inside the container and the electrical components outside the container. Prior to transportation to the off-shore wind turbine, the equipment inside the container can be arranged as described. For containers of the same module type, the equipment can be arranged in the same way for all the containers. Upon arranging the equipment in the container, it can be tested onshore and fixed in its position in order to enable transportation to the wind turbine. When arriving at the wind turbine site, the container can be installed on the wind turbine by moving it to its intended position and connecting the electrical components inside the container to the electrical components of the wind turbine preferably by plugging a connector to a connector box, thus providing fast installation. The time required between the arrival of a service vessel carrying the container at the wind turbine and the operation of the wind turbine using the components in the container is low.

The container as well as the passage are preferentially rectangular, but other forms are also possible. The floor, the sidewalls as well as the roof of the passage can be made of concrete.

The invention is not limited to offshore wind turbines, but can also be applied to onshore wind turbines or other facilities where the use of a modular container system facilitates mounting and service of the facility.

The central section and the respective passage of the respective side arm can be divided by a further side wall which comprises an opening having at least a partial overlap with the first opening of the container.

The transition platform comprises a central section, which might for example comprise an elevator moving from the central section to the nacelle of the wind turbine, and at least one arm extending radially outward from the central section, which is also part of the transition platform. The central section and the arm of the transition platform can be divided by the further side wall that is preferentially made of the same materials as the rest of the transition platform which can e.g. be reinforced concrete. In order to provide a connection between the central section and the arm of the transition platform, the further side wall can comprise an opening. This opening is preferentially of a size that enables service personnel to pass from the arm to the central section of the transition platform or vice versa. The opening between the central section and the arm of the transition platform preferentially has at least a partial overlap with the first opening of the container, thus allowing for the service personnel to pass from the container to the central section of the transition platform and to access for example the elevator. The opening between the arm and the central section of the transition platform also enables cables from the container, that are connected to electrical equipment inside the central section or in the tower of the wind turbine, to pass from the container to the central section.

The intended position of the container on the arm of the transition platform can be defined by the further side wall between the central platform and the arm of the wind turbine and e.g. an integrated door.

In order to close the opening between the arm and the central section of the transition platform, the further side wall can comprise a door, which can be closed or even sealed in order to be watertight. Electrical components inside the central section of the transition platform can be protected from water entering from the sea or rainy weather even in the absence of the container described above by sealing the door between the arm and the central section of the transition platform.

The side of the container bearing the second opening can be exposed.

The second opening of the container being on the opposite side of the first opening faces towards the outward end of the arm of the transition platform. The side comprising this opening is typically not covered by the passage and is neither in contact with the roof, the floor or the side walls of the transition platform. Being exposed to the environment, the second opening of the container can thus be sealed with a waterproof door, protecting the equipment used to run the wind turbine which is stored inside the container. The door can be opened, in order to enable access to authorized service personnel entering the container and/or passing through in order to enter the central section of the transition platform or the tower of the wind turbine.

A seal can be arranged between the floor and/or the roof and/or the side walls and/or the further side wall of the passage and an outer surface of the container.

Since the container is of a dimension which enables the container to be placed inside the passage of the arm of the transition platform, there might be empty space between the outer walls of the container and the floor, the side walls or the roof of the passage of the arm of the transition platform. To ensure that the opening between the inside of the container and the central section of the transition platform and, especially, the electrical connection between the electrical components inside the container and the electrical components on the transition platform of the wind turbine, is protected from water, the passageway between the inside of the container and the central section of the transition platform can be sealed by a door or a water gate.

A permanent flexible sealing can be used between at least part of the floor, the side walls and/or the roof of the passage of the arm of the transition platform and the outer side of the container. Such a sealing has to be resistant against aging and corrosion, and can be made of a material such as silicon-based polymers, polyurethanes, or silane-modified polymers. The sealing can be placed between the side comprising the first opening and the further side wall dividing the central section and the arm of the transition platform, between the floor of the transition platform and the outer side of the bottom of the container, between the outer side wall of the container and the side wall of the passage of the arm of the transition platform, and/or between the outer face of the upper side of the container and the roof of the passage of the arm of the transition platform. The seal can provide a watertight connection between the second opening of the container and the central section of the transition platform, and especially protect the electrical components from water.

The floor of the transition platform can be prolonged beyond the side walls and/or the roof of the respective passage at the outward end of the respective arm, resulting in an uncovered outward end of the respective arm of the transition platform.

Thus, the floor at the outward end of the arm of the transition platform is not covered, forming an open platform at the outer end. This open platform allows for the installation of cranes, which are used for lifting the container from a service vessel onto the arm of the transition platform, the storage of the containers on the arm of the transition platform prior to shifting them to the intended position, and/or the mounting of additional equipment, such as a railing system used for shifting a container to its intended position. It can also allow service personnel to get onto the transition platform of the wind turbine and then enter either the container or the central section, and/or the docking of service vessels. For safety reasons and in order to protect equipment from falling off the transition platform and into the sea, the platform and the outer end of the transition platform can be surrounded by a railing, which can be made from stainless steel or a similar material.

Preferentially, exactly one container is stored on each arm of the transition platform. However, it is also possible to store more than one container on each arm of the transition platform.

The at least one electrical component housed in the respective container can be connected to the at least one further electrical component outside the container via a connector and a cable comprising multiple electrical lines, which is separably connected to the connector, wherein the connector is mounted on the platform and connected to the electrical component via the cable or wherein the connector is mounted to the container and connected to the further electrical component via the cable.

In the space inside the container, equipment required to run the wind turbine, such as electrical equipment, is stored. In order to deliver the electrical energy generated by the wind turbine to e.g. land-based infrastructure, the electrical components on a wind turbine are used. Electrical components housed in the container might comprise transformers, converters, switch gear consisting of electrical disconnect switches, fuses and/or circuit breakers, e.g. used for controlling, protecting and isolating the electrical equipment. At least part of this electrical equipment can be housed and pre-arranged in the container, therein combined via cables comprising multiple lines, and connected to at least one further electrical component outside the container, which might be inside at least one other container, the central section of the transition platform or the nacelle. Connections between the electrical components inside the container and the electrical components outside the container are preferably provided by a single cable providing multiple electrical lines. Different electrical lines within the cable can provide power and/or control signal connections for different electrical components within the container.

In order to enable efficient connection of the electrical components and therewith fast and efficient installation of the container, the cable and the connector can be connected via a plug and connect system, using plugs to be connected to a connector box.

The electrical components housed in the container can be connected to the transition platform and therefore to components housed on the transition platform or other components of the wind turbine by a plug and play system. Such a system can allow the connection of all electrical devices housed in the container by just connecting one or a few, e.g. not more than three or five, plugs with connectors. This is e.g. possible by pre-wiring all the electrical components within the container and by combining all outside connections in one ore a few cables to be connected to a respective connector or connects on the transition platform or vice versa.

The container can e.g. house switchgear and/or a transformer and/or a turbine control unit and/ or a battery storage unit or container. All this components are than easily replaceable in a service or original equipment manufacturing situation by simply swapping the container, e.g. when the lifetime of housed batteries is expended.

The use of containers according to the present invention can therefore allow for a fast and easy replacement of electrical components and can therefore lower the cost of offshore operations and the turbine downtime necessary for servicing or manufacture of the wind turbine.

The container and/or the floor of the transition platform can be equipped with roller wheels or pads reducing the friction between the container and the floor of the transition platform.

Mounting of the container or exchanging the container can be accomplished using a service vessel. Thereby, the container to be mounted can be lifted from the service vessel onto the outward end or the floor of the transition platform by using a crane, which can for example be placed on the vessel or be mounted on the outward end of the transition platform. Once the container is lifted onto the outward end of the transition platform it has to be moved to its intended position. Since the container partially sits inside the passage of the arm of the transition platform in its intended position, it cannot typically be lifted to its intended position by the crane, but has to be shifted over the floor of the arm of the transition platform.

This can be facilitated by attaching roller wheels to the outside of the bottom of the container and rolling the container to its intended position using the roller wheels. Alternatively, the roller wheels can be attached to the floor of the side arm of the transition platform, and the container can be rolled to its intended position using these roller wheels. In either case, the roller wheels can be mounted to the transition platform or the container prior to moving the container to its intended position and optionally be dismounted once the container has been placed in the intended position.

An alternative to the attachment of roller wheels to the floor of the transition platform is lowering the friction between the floor of the transition platform and the outside of the bottom side of the container by attaching a pad to the container and/or on the floor of the side arm of the transition platform. The material of the pad can be chosen to be such that the static friction between the pad and the floor of the transition platform or the pad and the outside of the bottom side of the container, respectively, is below 0.35 and for the kinetic friction coefficient between the pad and the floor of the arm of the transition platform or between the pad and the outside of the bottom side of the container, respectively, is below 0.25. The pads can also be attached to the outside of the bottom side of the container and to the floor of the arm of the transition platform, as long as the static friction between the surfaces is below 0.35 and/or the kinetic friction between the surfaces is below 0.25. The pads can be attached to the outside of the bottom side of the container and/or the floor of the transition platform prior to moving the container to its intended position and can be optionally removed from the respective sides once the container has been placed onto its intended position.

A winch can be attached to the transition platform in the central section and/or at the outer end of the respective arm.

A winch and a pulley can be attached to the transition platform on the opposite sides of the arm wherein the winch can either be attached in the central section or at the outer end of the arm and the pulley can be attached in the outer end of the arm or in the central section.

In order to reduce the effort required for pulling the container, the winch can be used in combination with a pulley, whereas the winch is attached to the outer end of the arm of the transition platform, and the pulley is placed on the end of the arm of the transition platform heading towards the central section. The container is then connected to a rope which is attached to the winch and, between the winch and the container, redirected by a pulley. For dismounting the container from the transition platform, the winch and the pulley are placed on opposite sides, which means that the winch is placed on the side of the arm heading towards the central section and the pulley is placed on the outward end of the arm of the transition platform.

Additionally, the invention concerns a method for constructing or servicing a wind turbine, especially a wind turbine according to the present invention, comprising the steps of
- Providing a transition platform having at least one arm that extends outward from a central section, that is connectable to a tower, wherein the arm comprises a passage, connecting the central section of the transition platform with the outward end of the respective arm, which is formed by a floor, a roof and at least two side walls of the transition platform,
- Providing a container, featuring a first and a second opening on opposite sides of the container and a passageway connecting the first and the second opening allowing personal to pass through the container, and
- Arranging the container at least partially inside the passage of the transition platform, such that the first opening of the container faces towards the central section and the second opening side faces towards the outward end of the transition platform.

Prior to the transportation of the respective container to the wind turbine, at least part of the equipment required to run the wind turbine, which is, for example, electrical components, can be installed in the container. Testing of the equipment can also be performed in an onshore facility and once all the equipment is working, the container can be transferred to the wind turbine and arranged onto the transition platform of the wind turbine.

The step of arranging the container on the transition platform can comprise the steps of lifting the container from a service vessel to the floor of the transition platform, moving it towards the central section of the transition platform and connecting at least one electrical component of the wind turbine inside the container to at least one electrical component of the wind turbine outside of the container.

The container can be placed on the floor of the transition platform and pulled to its intended position either using a winch located in the central section of the transition platform, or using a combination of a winch placed in the outward end and a pulley placed in the central section of the transition platform.

Doing so, the winch can be attached to the side of the arm close to the central section of the transition platform, and the container to be placed in its intended position can be connected to the winch via a rope, which can for example be made of nylon, steel, or any other material. Once attached to the rope, the container is pulled towards the central section using the winch and the rope. After reaching its intended position, the container can be released from the winch and the rope, and the winch and the rope can optionally be detached from the transition platform.

Removal of the container can be done in a similar way, which is attaching the winch to the outward end of the arm of the transition platform, attaching the winch to the container via a rope and pulling the container towards the outward end of the arm of the transition platform using the winch and the rope. Once the container has been shifted to its intended position, the winch as well as the rope can optionally be detached from the transition platform.

Roller wheels can be attached to the outside of the bottom side of the container and/or to the floor of the arm of the transition platform, or the outside of the bottom side of the container and/or the floor of the arm of the transition platform can be equipped with friction-lowering pads to facilitate pulling of the container to its intended position.

A railing system can be mounted on the arm of the transition platform, leading from the outward end of the arm to the central section of the transition platform. The container can be lifted onto the railing system or placed between the rails and moved to its intended position using the rails as support and/or guidance. Once the container has reached the intended position, the railing system can be dismounted from the arm of the transition platform.

A railing system can be pre-mounted on the floor of the transition platform. Once lifted onto the arm of the transition platform, the container can be brought onto or in between the rails and moved to its intended position, using the rails as support and/or guidance. Once the container is placed onto its intended position, the railing system can be dismounted from the transition platform thus leaving the container on the intended position. The railing system can also be used to remove and dismount the container from the transition platform. The railing system can also be used in combination with roller wheels, pads, and/or a winch/pulley system in order to facilitate moving of the container to its intended position.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: An embodiment of the method according to the present invention used to construct an embodiment of the wind turbine according to the present invention,
- Fig. 2: a vertical cross-section of one arm of the transition platform shown in figure 1, whereas the container is not yet mounted onto the arm of the transition platform,
- Fig. 3: a vertical cross-section of the same arm of the transition platform as shown in fig. 2, whereas the container is mounted in its intended position and the electrical equipment inside the container is connected to the electrical equipment of the wind turbine,
- Fig. 4: a horizontal cross-section of the entire transition platform of the wind turbine, wherein the containers are not mounted on the arm of the transition platform.

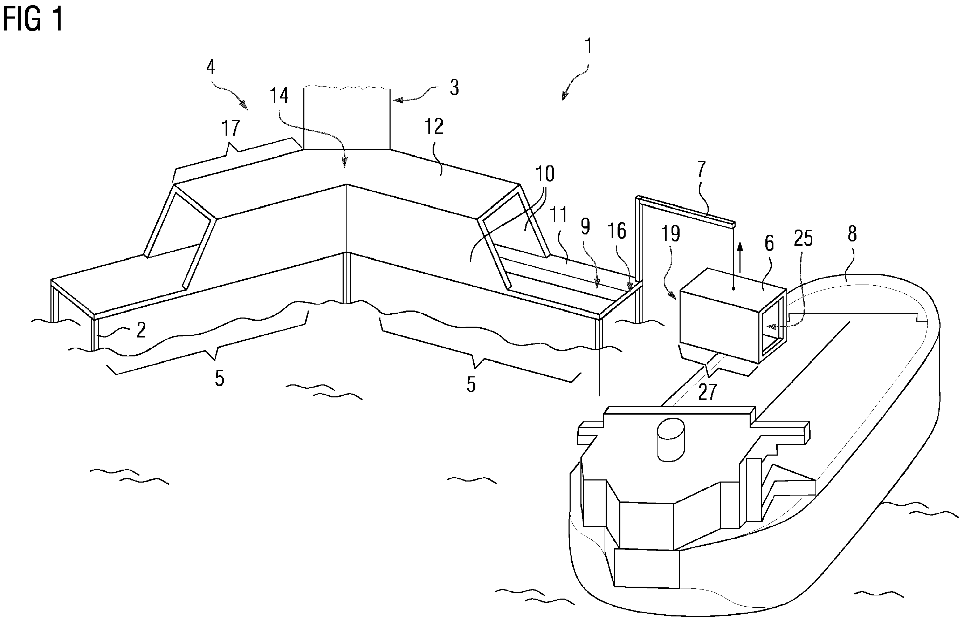

Fig. 1 shows an intermediate step in the construction of a wind turbine 1. A foundation 2, a transition platform 4 attached thereupon having multiple arms 5 extending horizontally outward from a central section 14, and a tower 3 connected to the central section 14 of the transition platform 4 are already installed at an offshore location. For the sake of simplicity the foundation 2 is only represented as a few vertical struts that keep the transition platform a certain distance above the water level. In many cases the foundation 2 will comprise additional components above the water level, e.g. cross braces, that are not shown.

To allow for an easy installation of the electrical components (not shown) these are pre-installed in the container 6 that is installed as a pre-configured module. To provide a space for installing the container 6, the arm 5 of the transition platform 4 comprises a passage 17, connecting the central section 14 with the outer end 16 of the respective arm 5. The passage 17 is formed by a floor 11, a roof 12 and at least two side walls 10 of the transition platform 4.

The container 6 features a first opening 19 and a second opening 25 on opposite sides of the container 6 and a passageway 27 connecting the first and the second opening 19, 25 allowing personal (not shown) to pass through a passage way 27 that connects the openings 19, 25. In the finished wind turbine 1 the container 6 will be arranged at least partially inside the passage 17 of the transition platform 4, such that the first opening 19 of the container 6 faces towards the central section 14 and the second opening 25 faces towards the outward end 16 of the transition platform 4. This allows personal 26 to access the central section 14 via the passage way 27 and to easily gain access to the electrical components installed in the container 6.

The electrical components and other components can be pre-installed into the container onshore. Once the pre-installation of the container 6 is finished, it can be transferred onto a service vessel 8 and shipped to the wind turbine 1. As shown in figure 1, the container 6 can be lifted from the service vessel 8 to the floor 11 of the transition platform 4 using for example a crane 7 placed at the outer end 16 of the transition platform 4. Once the container 6 is placed on the outer end 16 of the transition platform 4, it can be moved towards the central section 14 of the transition platform 4.

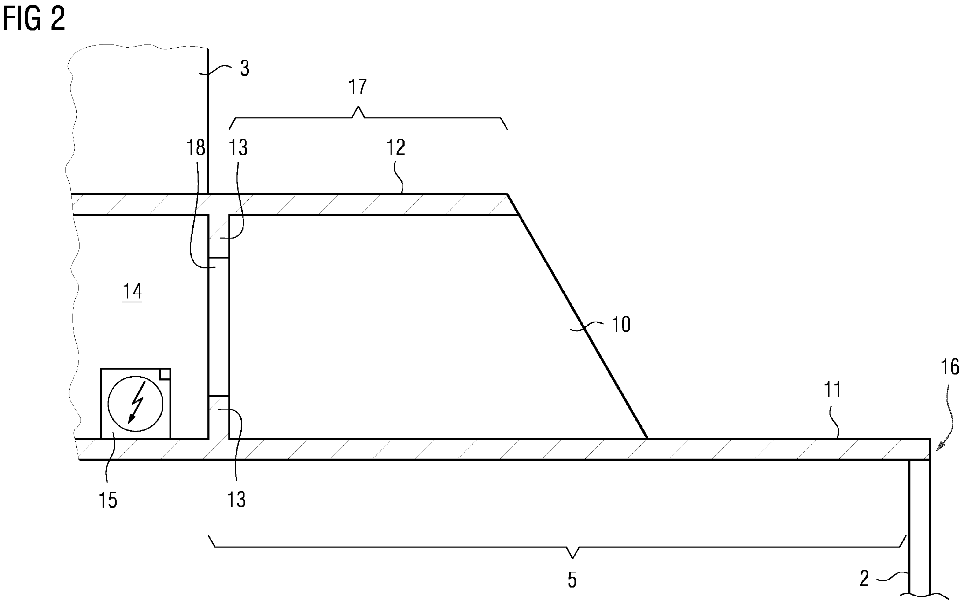

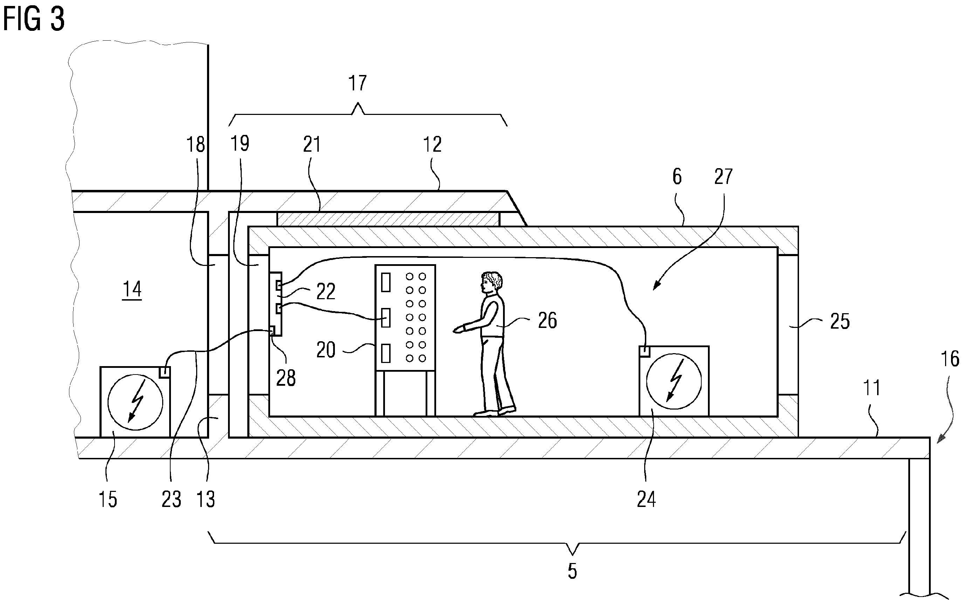

Fig. 2 shows a vertical cross-section of one arm 5 of the transition platform 4 shown in figure 1. The central section 14 and the respective passage 17 of the respective side arm 5 are divided by a further side wall 13, which comprises an opening 18 having at least a partial overlap with the first opening 19 of the container 6 (see figure 3).

At the outward end 16 of the arm 5, the floor 11 of the transition platform 4 is prolonged beyond the side walls 10 and the roof 12 of the respective passage 17. The resulting open platform at the outward end 16 of the respective arm 5 of the transition platform 4 allows for the installation of cranes 7, the storage of the container 6 on the arm 5 of the transition platform 4 prior to shifting it to the intended position, and/or the mounting of additional equipment, such as a rails 9 (see figure 1). It can also allow service personnel 26 to get onto the transition platform 4 of the wind turbine 1 and then enter either the container 6 or the central section 14 (see figure 3), and/or the docking of service vessels 8.

The central section 14 of the transition platform 4 comprises at least one electrical component 15 used to run the wind turbine.

Moving of the container 6 to its intended position shown in figure 3 can be accomplished by pulling the container without any additional tools. Optionally, one can use aids in order to ease moving of the container to its intended position.

For example, rails 9, leading from the outward end 16 of the arm 5 to the central section 14 of the transition platform 4, can be mounted on the arm 5 of the transition platform 4. The container 6 can be directly lifted by the crane 7 from the vessel 8 onto the rails 9 or between the rails 9. After being placed on or between the rails 9, the container 6 can be shifted to its intended position using the rails 9 as support and/or guidance. Once the container 6 has reached the intended position, the rails 9 can be dismounted from the transition platform 4.

Alternatively or additionally, the container 6 can be moved to its intended position using a winch (not shown) located in the central section 14 of the transition platform 4, or a combination of a winch placed at the outward end 16 and a pulley (not shown) placed in the central section 14 of the transition platform 4.

A further possibility to ease the transfer of container 6 from the outer end 16 of the arm 5 of the transition platform 4 to its intended position is to equip the container 6 and/or the floor 11 of the transition platform with roller wheels or pads (both not shown), both reducing the friction between the container 6 and the floor 11 of the transition platform 4.

It is also possible to use a combination of the above mentioned methods in order to ease moving of the container 6 to its intended position.

Figure 3 shows a vertical cross-section of the arm 5 of the transition platform 4 shown in figures 1 and 2 with the container 6 placed in its intended position within the passage 17. The side of the container 6 bearing the second opening 25 is exposed. In order to obtain a watertight connection between the central section 14 of the transition platform 4 and the container 6, a seal 21 can be arranged between the floor 11 and/or the roof 12 and/or the side walls 10 and/or the further side wall 13 of the passage 17 and an outer surface of the container 6. For reasons of clarity the seal 21 is only shown between the roof 12 and the container 6. It can however be advantageous to arrange a seal 21 on all sides of the container 6 and/or surrounding the opening 18 of the further side wall 13.

The container 6 comprises a first opening 19 on the side facing towards the central section 14 and a second opening 25 on the opposite side. The two openings are connected by a passageway 27, allowing personal 26 to pass through the container 6 into the central section 14.

Inside the passageway 27, the container 6 can house electrical components 20, 24 of the wind turbine 1. Both electrical components 20, 24 can be connected to a connector box 22 of the container during the pre-installation. The electrical connection of all electrical components 20, 24 to the electrical component 15 and optionally further electrical components installed outside of the container can then be achieved by connecting a single cable 23 to the connector 28 installed in the container. In some embodiments it might also be advantageous to install the connector 28 on the outer surface of the container 6. This allows a fast and easy connection of the electrical components 20, 24. The cable 23 can provide multiple electrical lines to carry current and/or signals independently to and/or from several electrical components 20, 24.

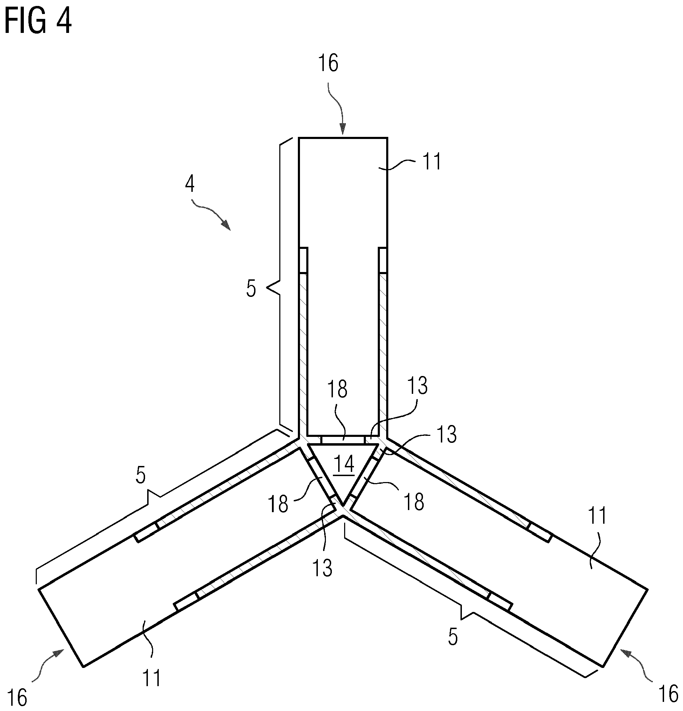

Fig. 4 shows a horizontal cross-section of the transition platform 4. In this example, the transition platform 4 comprises three different arms 5 and the central section 14, thus enabling the installation of preferentially three containers 6 on the transition platform 4. The central section 14 is divided from the passages 17 of the arms 5 by the further side walls 13, which comprise a respective opening 18 enabling service personnel to pass from the passage 17 to the central section 14. In order to prevent water from coming inside the central section 14, the opening 18 can comprise a door which can be sealed.

Although the present invention has been described in detail with reference to the preferred embodiment, the present invention is not limited by the disclosed examples from which the skilled person is able to derive other variations without departing from the scope of the invention.

## Claims

1. Wind turbine (1), comprising of a foundation (2), a transition platform (4) attached thereupon having at least one arm (5) that extends horizontally outward from a central section (14), and a tower (3) connected to the central section (14) of the transition platform, wherein the arm (5) of the transition platform (4) comprises a passage (17), connecting the central section (14) with the outward end (16) of the respective arm (5), which is formed by a floor (11), a roof (12) and at least two side walls (10) of the transition platform (4), **characterized in that** a respective container (6) is arranged on the floor (11) at least partially within the respective passage (17), the container (6) featuring a first opening (19) on the side facing towards the central section (14) and a second opening (25) on the opposite side and a passageway (27) connecting the first and the second opening (19,25) allowing personal (26) to pass through the container (6) into the central section (14), wherein the container (6) houses at least one electrical component (20) of the wind turbine (1) which is connected to at least one further electrical component (15) of the wind turbine (1) outside of the container (6).

2. Wind turbine according to claim 1, wherein the central section (14) and the respective passage (17) of the respective side arm (5) are divided by a further side wall (13) which comprises an opening (18) having at least a partial overlap with the first opening (19) of the container (6).

3. Wind turbine according to claim 1 or 2, wherein the side of the container bearing the second opening (25) is exposed.

4. Wind turbine according to one of the preceding claims, wherein a seal (21) is arranged between the floor (11) and/or the roof (12) and/or the side wall (10) and/or the further side wall (10) of the passage (17) and an outer surface of the container (6).

5. Wind turbine according to one of the preceding claims, wherein the floor (11) of the transition platform (4) is prolonged beyond the side walls (10) and the roof (11) of the respective passage (17) at the outward end (16) of the respective arm (5), resulting in an uncovered outward end (16) of the respective arm (5) of the transition platform (4).

6. Wind turbine according to one of the preceding claims, wherein the at least one electrical component (20) housed in the respective container (6) is connected to the at least one further electrical component (15) outside the container via a connector (22) and a cable (23) comprising multiple electrical lines, which is separately connected to the connector (22), wherein the connector is mounted to the transition platform (4) and connected to the electrical component (20) via the cable (23) or wherein the connector (22) is mounted to the container (6) and connected to the further electrical component (15) via the cable (23).

7. Wind turbine according to one of the preceding claims wherein the container (6) and/or the floor (11) of the transition platform (4) are equipped with roller wheels or pads reducing the friction between the container (4) and the floor (11) of the transition platform (4).

8. Wind turbine according to one of the preceding claims wherein a winch is attached to the transition platform (4) in the central section (14) and/or at the outer end (16) of the respective arm (5).

9. Wind turbine according to one of the preceding claims wherein a winch and a pulley are attached to the transition platform (4) on the opposite sides of the arm 5 wherein the winch can is either attached in the central section (14) or at the outer end (16) of the arm (5) and the pulley in the outer end (16) of the arm (5) or in the central section (14), respectively.

10. A method for constructing or servicing a wind turbine (1), especially a wind turbine (1) according to the previous claims, comprising the steps of
- Providing a transition platform (4) having at least one arm (5) that extends outward from a central section (14) that is connectable to a tower (3), wherein the arm (5) comprises a passage (17), connecting the central section (14) of the transition platform (4) with the outward end (16) of the respective arm (5), which is formed by a floor (11), a roof (12) and at least two side walls (10) of the transition platform (4),
- Providing a container (6), featuring a first (19) and a second (25) opening on opposite sides of the container (6) and a passageway (27) connecting the first and the second opening (19,25) allowing personal (26) to pass through the container (6), and
- Arranging the container (6) at least partially inside the passage (17) of the transition platform (4), such that the first opening (19) of the container (6) faces towards the central section (14) and the second opening (25) side faces towards the outward end (16) of the transition platform (4).

11. A method according to claim 10, wherein the step of arranging of the container (6) on the transition platform (4) comprises the steps of lifting the container (6) from a service vessel (8) to the floor (11) of the transition platform (4), moving it towards the central section (14) of the transition platform (4) and connecting at least one electrical component (20) of the wind turbine (1) inside the container (6) to at least one electrical component (15) of the wind turbine (1) outside of the container (6).

12. A method according to claims 10 or 11, wherein the container (6) is placed on the floor (11) of the transition platform (4) and pulled to its intended position either using a winch located in the central section (14) of the transition platform (4), or using a combination of a winch placed in the outward end (16) and a pulley placed in the central section (14) of the transition platform (4).

13. A method according to one of the claims 10-12, wherein a railing system (9) is mounted on the arm (5) of the transition platform (4), leading from the outward end (16) of the arm (5) to the central section (14) of the transition platform (4), the container (6) is lifted onto the railing system (9) or placed between the rails (9) and moved to its intended position using the rails (9) as support and/or guidance, and, once the container (6) has reached the intended position, the railing system (9) is dismounted from the arm (5) of the transition platform (4).
